Europäisches Patentamt

European Patent Office

Office européen des brevets

(19)

(11) **EP 1 254 711 A1**

(12) **EUROPÄISCHE PATENTANMELDUNG**

(43) Veröffentlichungstag:
**06.11.2002  Patentblatt 2002/45**

(51) Int Cl.⁷: **B01J 23/38**, B01J 23/54,
B01J 23/89, B01J 35/10,
B01J 35/04, H01M 4/92,
B01J 37/08

(21) Anmeldenummer: **01110891.7**

(22) Anmeldetag: **05.05.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **OMG AG & Co. KG**
**63457 Hanau (DE)**

(72) Erfinder: **Die Erfindernennung liegt noch nicht
vor**

(74) Vertreter: **Herrmann, Reinhard**
**OMG AG**
**FI-PAT**
**Postfach 1351**
**63403 Hanau (DE)**

(54) **Edelmetallhaltiger Trägerkatalysator und Verfahren zu seiner Herstellung**

(57)     Die Erfindung betrifft einen edelmetallhaltigen Trägerkatalysator, welcher auf einem pulverförmigen Trägermaterial eines der Edelmetalle aus der Gruppe Au, Ag, Pt, Pd, Rh, Ru, Ir, Os oder Legierungen eines oder mehrerer dieser Edelmetalle enthält. Die auf dem Trägermaterial abgeschiedenen Kristallite der Edelmetalle weisen einen röntgenografischen Kristallinitätsgrad über 2 und eine mittlere Partikelgröße zwischen 2 und 10 nm auf. Die hohe Kristallinität und die geringe Partikelgröße der Edelmetallpartikel führt zu einer hohen katalytischen Aktivität des Katalysators. Er ist besonders für die Verwendung in Brennstoffzellen und bei der Reinigung der Abgase von Verbrennungsmotoren geeignet.

Figur

EP 1 254 711 A1

**Beschreibung**

Die vorliegende Erfindung betrifft einen edelmetallhaltigen Trägerkatalysator, welcher auf einem pulverförmigen Trägermaterial eines der Edelmetalle aus der Gruppe Au, Ag, Pt, Pd, Rh, Ru, Ir, Os oder Legierungen eines oder mehrerer dieser Edelmetalle enthält sowie ein Verfahren zu seiner Herstellung.

Edelmetallhaltige Trägerkatalysatoren werden in vielen technischen Gebieten wie zum Beispiel der Synthese chemischer Verbindungen, der Umsetzung von Schadstoffen in Abgasen von Verbrennungsmotoren und als Elektrokatalysatoren für Brennstoffzellen eingesetzt, um nur einige Anwendungsgebiete zu nennen.

Zur Erzielung einer möglichst hohen katalytischen Aktivität der Edelmetalle müssen sie auf der Oberfläche des jeweiligen Trägermaterials in möglichst hoher Dispersion mit Partikelgrößen im Bereich zwischen 1 und 15 nm aufgebracht werden. Eine geringe Partikelgröße allein ist jedoch noch keine Garantie für eine hohe Aktivität. Wie zum Beispiel im Falle von Pt/C-Katalysatoren gefunden wurde (K. Kinoshita, J. Electrochem. Soc., Vol. 137, No. 3, 845 bis 848 (1990)), ist eine gut ausgebildete kristalline Struktur der Platinpartikel wesentlich für eine hohe elektrochemische Aktivität bei der Sauerstoffreduktion. Insbesondere sind die (1,0,0), (1,1,0) sowie (1,1,1)-Kristalloberflächen des Platins für die Sauerstoffreduktion verantwortlich. Eine schlecht ausgebildete Kristallstruktur der Platinpartikel führt also auch zu einer verminderten katalytischen Aktivität.

Ähnliches gilt auch für die Qualität der Legierungsbildung von Legierungskatalysatoren. So beschreiben das US-Patent US 4,677,092 ternäre Legierungskatalysatoren für Brennstoffzellen mit einer geordneten Kristallstruktur. Auf Grund ihrer geordneten Kristallstruktur weisen die Katalysatoren eine katalytische Aktivität für die elektrochemische Reduktion von Sauerstoff auf, die wenigstens doppelt so groß ist wie die eines nicht legierten Platinkatalysators. Zur Herstellung des Katalysators werden die Legierungskomponenten durch Imprägnieren auf dem Trägermaterial abgeschieden. Die Legierungsbildung wird durch Calcinierung bei 900 °C für die Dauer von einer Stunde unter einer Stickstoffatmosphäre vorgenommen.

Als Trägermaterial für Trägerkatalysatoren kommen je nach Anwendungsgebiet unterschiedliche Materialien zum Einsatz, die in der Regel alle eine hohe spezifische Oberfläche, die sogenannte BET-Oberfläche (gemessen nach DIN 66132 durch Stickstoffadsorption) von mehr als 10 $m^2$/g aufweisen. Für Brennstoffzellen kommen elektrisch leitfähige Kohlenstoffmaterialien als Träger für die katalytisch aktiven Komponenten zur Anwendung. In der Autoabgaskatalyse werden dagegen oxidische Trägermaterialien wie zum Beispiel aktive Aluminiumoxide (zum Beispiel γ-Aluminiumoxid), Aluminiumsilicat, Zeolith, Titanoxid, Zirkonoxid, Seltenerdoxide oder Mischungen oder Mischoxide davon verwendet.

Auf der Oberfläche dieser Materialien werden Vorläuferverbindungen der katalytisch aktiven Komponenten abgeschieden und durch eine nachfolgende Temperaturbehandlung in die endgültige katalytisch aktive Form überführt. Von der Art und Durchführung dieser beiden Prozesse (Abscheidung und Temperaturbehandlung) hängt entscheidend die Feinteiligkeit (Dispersion) der katalytisch aktiven Partikel des fertigen Katalysators und damit die für den katalytischen Prozeß zur Verfügung stehende katalytische Metalloberfläche ab.

Für das Abscheiden der katalytisch aktiven Komponenten auf den pulverförmigen Trägermaterialien sind verschiedene Verfahren bekannt geworden. Hierzu gehört zum Beispiel die Imprägnierung mit einem Überschuß an Imprägnierlösung. Hierbei wird dem pulverförmigen Trägermaterial eine wäßrige Lösung der katalytisch aktiven Komponenten zugesetzt, deren Volumen wesentlich größer sein kann als die Wasseraufnahmekapazität des Trägermaterials. Es resultiert dabei eine Masse mit breiiger Konsistenz, die zum Beispiel in einem Ofen bei erhöhten Temperaturen von 80 bis 150°C entwässert wird. Beim Entwässern dieser Masse kann es zu chromatografischen Effekten kommen, die zu einer ungleichmäßigen Verteilung der katalytisch aktiven Komponenten auf dem Trägermaterial führen kann.

Bei der sogenannten Porenvolumenimprägnierung wird zur Lösung der katalytisch aktiven Komponenten eine Menge an Lösungsmittel verwendet, die etwa 70 bis 110% der Aufnahmekapazität des Trägermaterials für dieses Lösungsmittel entspricht. In der Regel handelt es sich hierbei um Wasser. Diese Lösung wird möglichst gleichmäßig zum Beispiel durch Sprühen über das in einem Kessel umgewälzte Trägermaterial verteilt. Nach Verteilung der gesamten Lösung über dem Trägermaterial ist dieses trotz des Wassergehaltes immer noch rieselfähig. Mit der Porenvolumenimprägnierung können chromatografische Effekte weitgehend vermieden werden. Sie liefert gewöhnlich bessere Ergebnisse als das oben beschriebene Verfahren der Imprägnierung mit einem Überschuß an Lösungsmittel.

In der DE 197 14 732 A1 wird ein Verfahren zur sogenannten homogenen Abscheidung aus der Lösung beschrieben. Hierbei wird das Trägermaterial zunächst zum Beispiel in Wasser suspendiert. Danach wird eine wäßrige Lösung von Vorläuferverbindungen der katalytischen Komponenten unter ständigem Rühren mittels Kapillarinjektion zugeführt. Unter Kapillarinjektion wird hierbei die langsame Zugabe der Lösung mittels einer Kapillare unter die Oberfläche der Suspension des Trägermaterials verstanden. Durch intensives Rühren und langsame Zugabe soll eine möglichst rasche und homogene Verteilung der Vorläuferverbindungen über das gesamte Volumen der Suspension gewährleistet werden. Hierbei kommt es schon zu einer gewissen Adsorption der Vorläuferverbindungen auf der Oberfläche des Trägermaterials und damit zur Bildung von Kristallisationskeimen. Das Ausmaß dieser Adsorption hängt von der Materialkombination Trägermaterial/Vorläuferverbindung ab. Bei Materialkombinationen, die keine ausreichende Adsorption der Vorläuferverbindungen auf dem Trägermaterial gewährleisten, oder wenn eine chemische Fixierung der katalytisch aktiven Komponenten auf dem Trägermaterial gewünscht ist, können die Vorläuferverbindungen durch Kapillarinjektion einer Base in die Suspension des Trägermaterials auf dem Trägermaterial ausgefällt werden.

Zur Fertigstellung des Katalysatormaterials wird das mit den katalytisch aktiven Komponenten beschichtete Trägermaterial einer abschließenden thermischen Behandlung unterzogen, die die Vorläuferverbindungen der katalytisch aktiven Komponenten in die katalytisch aktive Form überführen und gegebenenfalls zur Ausbildung einer Legierung führen. Hierfür sind Temperaturen oberhalb von 300 °C bis zu 1000 °C und Behandlungszeiten von 0,5 bis 3 Stunden notwendig. Dabei wendet man sogenannte Batchprozesse an, bei denen das Katalysatormaterial agglomeriert und die Edelmetallpartikel aufgrund der langen Behandlungszeit und der dadurch eintretenden Sintereffekte vergrößern. Dabei können Edelmetallpartikel bis zu 50 nm und mehr entstehen. Zur Bildung einer Legierung sind gewöhnlich Temperaturen oberhalb von 900 °C und Behandlungsdauern von wenigstens 0,5 Stunden notwendig, wobei die Gefahr eines übermäßigen Partikelwachstums durch Sinterung besteht.

Es ist jedoch wichtig daß die Katalysatoren eine möglichst hohe Edelmetalloberfläche (d.h. hohe Dispersion) auf dem Träger aufweisen, damit eine hohe katalytische Aktivität gewährleistet wird. Katalysatoren mit mittleren Partikelgrößen der Edelmetalle über 20 nm sind gewöhnlich nur wenig aktiv.

Mit den bekannten Behandlungsverfahren von mit Katalysatoren belegten Trägermaterialien können die widerstreitenden Forderungen nach gut ausgebildeter Kristallinität oder Legierungsstruktur und kleinen mittleren Partikeldurchmessern der Edelmetallkristallite nicht gleichzeitig erfüllt werden.

Ein alternatives Verfahren zur Temperaturbehandlung von pulverförmigen Stoffen beschreibt die DE 198 21 144 A1. Die pulverförmigen Stoffe werden dabei in einem Hochtemperatur-Strömungsreaktor behandelt. Die Behandlungstemperatur im Strömungsreaktor kann oberhalb von 1000 °C liegen. Die Behandlungsdauer kann zwischen 0,01 Sekunden und wenigen Minuten variiert werden. Damit können feindisperse Edelmetallpartikel auf zum Beispiel Aluminiumoxid abgeschieden werden. Über die tatsächlich erreichten mittleren Partikeldurchmesser der Edelmetallpartikel sowie über ihre Kristallinität oder Legierungsstruktur macht diese Offenlegungsschrift keinerlei Angaben.

Als wesentliche Heizquelle nennt die DE 198 21 144 A1 einen turbulenten oder laminaren Brenner. Das Verfahren arbeitet damit in oxidierender Atmosphäre und ist zur Herstellung von Katalysatoren auf Trägermaterialien aus Kohlenstoff (Graphit, Ruß), wie sie für Brennstoffzellen zum Einsatz kommen, nicht geeignet. Der Trägerruß würde oxidiert werden und teilweise verbrennen.

Vor dem geschilderten Stand der Technik ist es Aufgabe der vorliegenden Erfindung, edelmetallhaltige Trägerkatalysatoren bereitzustellen, die eine hohe Kristallinität, beziehungsweise eine gut ausgebildete Legierungsstruktur bei gleichzeitig geringer Partikelgröße, das heißt bei hoher Dispersion, aufweisen.

Diese Aufgabe wird gelöst durch einen edelmetallhaltigen Trägerkatalysator, der auf einem pulverförmigen Trägermaterial eines der Edelmetalle aus der Gruppe Au, Ag, Pt, Pd, Rh, Ru, Ir, Os oder Legierungen eines oder mehrerer dieser Edelmetalle enthält. Der Trägerkatalysator ist dadurch gekennzeichnet, daß die auf dem Trägermaterial abgeschiedenen Kristallite der Edelmetalle einen relativen röntgenografischen Kristallinitätsgrad $C_x$ über 2, bevorzugt über 5, und eine mittlere Partikelgröße zwischen 2 und 10 nm aufweisen.

Der erfindungsgemäße Katalysator weist aufgrund einer noch zu beschreibenden thermischen Behandlung eine sehr hohe Kristallinität auf. Zur quantitativen Erfassung der Kristallinität wurde von den Erfindern der relative Kristallinitätsgrad $C_x$ eingeführt, der durch röntgenografische Messungen bestimmt werden kann. Er ist definiert durch Gleichung (1):

$$C_x = \frac{I_x - I_a}{I_a} \qquad (1)$$

Die Bestimmung des relativen Kristallinitätsgrades erfolgt durch röntgenografische Messungen an pulverförmigen Proben (Pulverdiffraktometer der Fa. Stoe, Kupfer-K$\alpha$-Strahlung). In Gleichung (1) bedeutet $I_x$ die Intensität eines bestimmten Beugungsreflexes (gemessen in Counts) der Katalysatorprobe. Bei Platin wird zum Beispiel der (hkl 1,1,1)-Reflex vermessen, der als Maß für eine hohe elektrochemische Aktivität bei der Sauerstoffreduktion angesehen werden kann. Bei $I_a$ handelt es sich um die Intensität der Röntgenbeugung eines röntgenamorphen Standards mit der gleichen Zusammensetzung wie die Katalysatorprobe, wobei die Intensität des Beugungsreflexes des Standards unter demselben Winkel wie für die Probe ermittelt wird. Im Falle eines kohlegeträgerten Platinkatalysators ist es ein Material mit einer Partikelgröße des Platins unter 2 nm, welches keine röntgenografischen Reflexe mehr zeigt.

Je nach Anwendungserfordernis für den Katalysator können unterschiedliche Trägermaterialien verwendet werden. Für die Anwendung als Anoden- oder Kathodenkatalysator in Brennstoffzellen werden gewöhnlich elektrisch leitfähige Trägermaterialien auf der Basis von Kohlenstoff aus der Gruppe Ruß, Graphit, Aktivkohle und faserförmige, graphitische Nanoröhren eingesetzt. Für Autoabgaskatalysatoren kommen dagegen oxidische Materialien aus der Gruppe aktives Aluminiumoxid, Aluminiumsilicat, Zeolith, Titanoxid, Zirkonoxid, Seltenerdoxide oder Mischungen oder Mischoxide davon zum Einsatz. Weiterhin können die Edelmetalle des Katalysators zusätzlich mit wenigstens einem Nichtedelmetall aus der Gruppe Ti, Zr, V, Cr, Mn, Fe, Co, Ni, Cu und Zn legiert sein. Diese Nichtedelmetalle wirken als Promotoren, das heißt sie verändern die katalytische Wirkung der Edelmetalle.

Der erfindungsgemäße Katalysator eignet sich besonders vorteilhaft für den Einsatz als Anoden- oder Kathodenkatalysator in Brennstoffzellen. Als Kathodenkatalysator weist er zum Beispiel Platin auf Ruß in einer Konzentration zwischen 5 und 80 Gew.-%, bezogen auf das Gesamtgewicht aus Trägermaterial und Platin, auf. Als Anodenkatalysator wird dagegen eine CO-tolerante Pt/Ru-Legierung auf Ruß in einer Konzentration zwischen 5 und 80 Gew.-%, bezogen auf das Gesamtgewicht aus Trägermaterial und der Legierung, eingesetzt, wobei das Atomverhältnis von Pt zu Ru zwischen 5:1 und 1:5 beträgt. Das Trägermaterial Ruß sollte für diese Anwendungen eine Oberfläche von wenigstens 40 $m^2/g$ aufweisen.

Wesentlich für den erfindungsgemäßen Katalysator ist, daß die Anforderungen an den Kristallinitätsgrad und an die Partikelgröße gleichzeitig erfüllt sind. Er zeigt dadurch überlegene Eigenschaften beim Einsatz als Katalysator in Brennstoffzellen und bei der Abgasreinigung von Verbrennungsmotoren.

Diese Anforderungen können erfüllt werden, wenn bei der Herstellung folgende Maßnahmen eingehalten werden. Zunächst muß sichergestellt werden, daß die Abscheidung der Edelmetalle auf dem Trägermaterial so geführt wird, daß die sich ergebenden Edelmetallkristallite nicht größer als 10 nm sind. Es wurde gefunden, daß diese Bedingung zum Beispiel mit der Porenvolumenimprägnierung oder mit der homogenen Abscheidung aus der Lösung eingehalten werden kann. Im Falle der homogenen Abscheidung aus der Lösung wird das beschichtete Trägermaterial von der Lösung abgetrennt, getrocknet und gegebenenfalls einer milden Calcinierung unterzogen, die so geführt wird, daß keine wesentliche Komvergrößerung der Edelmetallkristallite eintritt. Auf diese Weise wird eine Vorstufe des Katalysators erhalten, die zur Erhöhung der Kristallinität und gegebenenfalls zur Legierungsbildung einer weiteren Temperaturbehandlung unterzogen werden muß. Im Falle der Porenvolumenimprägnierung kann das imprägnierte Material ohne zusätzliche Trocknung und Calcinierung direkt als Vorstufe für die weitere Temperaturbehandlung eingesetzt werden.

Die abschließenden Temperaturbehandlung der Vorstufe des Katalysators muß gewährleisten, daß die Anforderungen an den relativen Kristallinitätsgrad und die mittlere Partikelgröße eingehalten werden. Es wurde gefunden, daß dies möglich ist, wenn die Vorstufe des Katalysators einer kurzzeitigen, allseitigen Temperaturbehandlung bei einer Temperatur zwischen 1000 und 1800 °C für die Dauer von weniger als einer Minute ausgesetzt wird.

Bevorzugt sollte die für die Temperaturbehandlung benötigte Wärmeenergie durch Strahlung auf das Trägermaterial übertragen werden. Diese Vorgehensweise ermöglicht eine schnelle Aufheizung der Partikel des Trägermaterials. Besonders vorteilhaft ist die Strahlungsheizung bei kohlenstoffhaltigen Trägermaterialien wie zum Beispiel Ruß oder Aktivkohle. Diese Materialien absorbieren die einfallende Wärmestrahlung nahezu vollständig und heizen sich deshalb besonders schnell auf.

Zur Durchführung der Temperaturbehandlung des Trägermaterials wird es zunächst kontinuierlich in einem auf eine Temperatur zwischen 300 und 500°C erwärmten, inerten Traggas dispergiert. Die Vorwärmung des Traggases muß dabei auf eine Temperatur beschränkt werden, bei der noch keine wesentliche Vergröberung der Edelmetallkristallite stattfindet. Anschließend wird der Gasstrom durch ein Reaktionsrohr geleitet. Die Temperatur der Rohrwand wird durch Beheizung von außen auf der gewünschten Behandlungstemperatur von 1000 bis 1800 °C gehalten. Der Volumenstrom des Traggases wird so gewählt, daß die Dauer für das Durchströmen des Reaktionsrohres im Bereich weniger Sekunden bis maximal eine Minute beträgt. Diese Verweilzeit ist so kurz bemessen, daß die eigentliche Erwärmung des Trägermaterials durch Übertragung von Strahlungswärme erfolgt und nur zu einem geringeren Teil durch Wärmeleitung von der Rohrwand über das Traggas.

Die Erwärmung der Partikel des Trägermaterials durch Zufuhr von Strahlungswärme geht wesentlich schneller vonstatten als es durch Wärmetransport durch das Traggas hindurch möglich wäre. Nach Verlassen des Reaktionsrohres werden Trägermaterial und Traggas schnell auf Werte unterhalb von etwa 500 °C abgekühlt, um ein übermäßiges Kristallitwachstum zu stoppen. Danach wird das so hergestellte Katalysatormaterial vom Traggasstrom abgetrennt und der weiteren Verwendung zugeführt.

Durch die schlagartige Erwärmung der Katalysatorvorstufe auf die Behandlungstemperatur und Abkühlung nach nur einer kurzen Behandlungsdauer wird gewährleistet, daß sich eine gute Kristallinität oder Legierungsstruktur der Edelmetallpartikel herausbilden kann, jedoch ein übermäßiges Partikelwachstum durch Diffusion auf der Oberfläche des Trägermaterials unterbleibt. Die kurze Behandlungsdauer erlaubt es, mit wesentlich höheren Behandlungstemperaturen zu arbeiten als es bei einer konventionellen Caicinierung möglich ist. Die höheren Behandlungstemperaturen wirken sich vorteilhaft auf die Geschwindigkeit aus, mit der sich die Kristallstruktur der Edelmetallpartikel herausbildet.

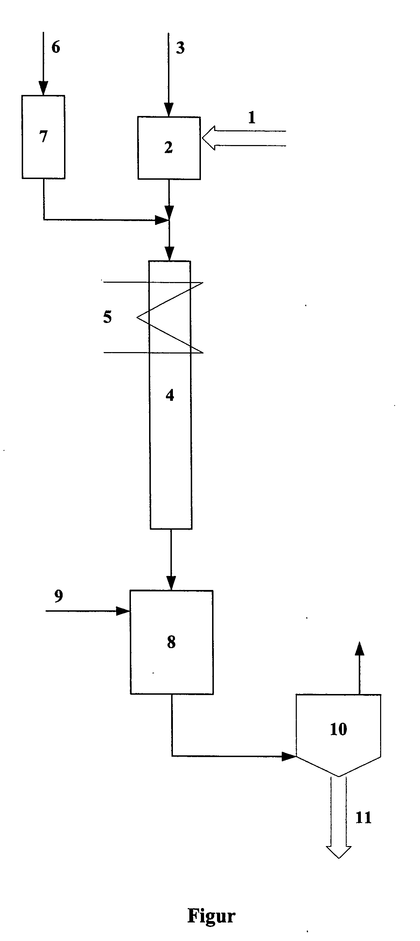

Die folgenden Beispiele und die einzige Figur sollen die Erfindung weiter erläutern.

Die Figur zeigt den prinzipiellen Aufbau einer möglichen Apparatur zur Temperaturbehandlung der Katalysatorvorstufe zur Herstellung des erfindungsgemäßen Katalysators. Die Katalysatorvorstufe ist das Edukt (1) und wird kontinuierlich einem Gas-Dispergator (2) zugeführt. Zur Dispergierung des pulverförmigen Eduktmaterials wird der Dispergator mit einem inerten Dispergiergas (3), in der Regel Stickstoff, versorgt. Nach Verlassen des Dispergators wird dem mit dem Edukt beladenen Dispergiergas ein sogenanntes Traggas (6) zugemischt, welches vor dem Zumischen in der Heizeinheit (7) so weit aufgeheizt wird, daß nach dem Zumischen die Temperatur der Feststoff-Gasdispersion etwa zwischen 350 und 500 °C liegt. Mit dieser Temperatur tritt die Feststoff-Gasdispersion in ein Reaktionsrohr (4) ein, das von außen mittels einer Heizeinrichtung (5) auf die gewünschte Behandlungstemperatur zwischen 1000 und 1800 °C aufgeheizt wird. Der Volumenstrom des zugeführten Traggases wird so bemessen, daß unter Berücksichtigung der Dimensionen des Reaktionsrohres sich die gewünschte Behandlungsdauer des Eduktes im Reaktionsrohr ergeben. Nach Verlassen des Reaktionsrohres gelangt der Traggasstrom mit dem Eduktmaterial in eine Abschreckeinheit (8), in der das behandelte Eduktmaterial durch Einblasen von zum Beispiel Stickstoff (9) sehr schnell auf eine Temperatur unter etwa 500 °C abgeschreckt wird. In der Filtereinheit (10) wird schließlich das fertige Katalysatormaterial vom Traggas abgetrennt und als Produkt (11) ausgetragen.

Aufgrund der kurzen Verweilzeit des Eduktmaterials im Reaktionsrohr kommt es nur zu einer geringen Wärmeübertragung durch Wärmeleitung über die Gasphase. Das Eduktmaterial wird vielmehr hauptsächlich durch Strahlungswärme von der Wand des Reaktionsrohres sehr rasch erwärmt und läßt sich dementsprechend auch sehr schnell wieder abkühlen. Zur Vermeidung von Lufteinbrüchen wird in der gesamten Apparatur ein leichter Überdruck aufrecht erhalten.

Durch die beschriebene Kurzzeit-Temperaturbehandlung werden die Partikelgrößen der Edelmetallkristallite nur geringfügig vergrößert. Durch eine Wärmebehandlung in konventionellen Drehrohröfen oder chargenweise in Kammeröfen sind so kurze Behandlungszeiten wie mit der beschriebenen Apparatur nicht zu verwirklichen. Darüber hinaus kommt es im Vergleich zu den konventionellen Temperaturbehandlungen, bei denen das Behandlungsgut in Schalen, Wannen oder sonstigen Behältern eingebracht wird, zu wesentlich geringeren Agglomerationen und Verbackungen des Katalysatormaterials. Dies wird durch die Dispergierung des Katalysators in dem kontinuierlichen Strom des Traggases erreicht.

Die erfindungsgemäßen Katalysatoren weisen aufgrund des speziellen thermischen Behandlungsverfahrens nur geringe mittlere Partikelgrößen der Edelmetallkristallite von unter 15 nm, vorzugsweise unter 10 nm auf. Ihre spezifische Metalloberfläche liegt im Bereich von 20 bis 200 m$^2$/g. Gleichzeitig weisen sie eine hohe Kristallinität auf. Wie die Bestimmung des oben definierten relativen Kristallinitätsgrad $C_x$ zeigten, liegt dieser um den Faktor 2, in der Regel sogar um den Faktor 5, über dem relativen Kristallinitätsgrad von herkömmlichen Katalysatoren.

Ein bevorzugter Anwendungsbereich des erfindungsgemäßen Katalysators ist die Verwendung als Anoden- oder Kathodenkatalysator in Brennstoffzellen. In PEM-Brennstoffzellen (Polymer-Elektrolyt-Membran-Brennstoffzellen) werden als Anoden- und Kathodenkatalysator Platin- und Platinlegierungen auf einem leitfähigen Trägermaterial (meist Ruß oder Graphit) verwendet. Der Gehalt an Edelmetall liegt zwischen 10 bis 80 Gew.-%, bezogen auf das Gesamtgewicht des Katalysators.

Für die Anodenseite der PEM-Brennstoffzelle (Polymer-Elektrolyt-Membran-Brennstoffzelle) werden in der Regel rußgeträgerte Platin/Ruthenium-Katalysatoren eingesetzt. Das Verhältnis Platin/Ruthenium liegt im Bereich Pt/Ru = 5:1 bis 1:5 (Atomverhältnis), wobei das Ruthenium über eine elektrochemische Redoxreaktion ("Spill over-Effekt") mit Wasser die CO-Vergiftung des Platinkatalysators reduziert. Kohlenmonoxidhaltige Wasserstoffgemische werden bei reformatbetriebenen Brennstoffzellen verwendet.

PtRu-Elektrokatalysatoren sind seit langer Zeit Stand der Technik auf diesem Gebiet und werden beispielsweise in der Patentschrift US 6.007.934 beschrieben. Zur Temperung der Materialien werden aufwendige Batchverfahren eingesetzt, bei denen die Katalysatorpartikel vergröbern.

Für die Kathodenseite der PEM-Brennstoffzelle setzt man vorzugsweise reine Pt-Katalysatoren mit einer Pt-Beladung von 20 bis 80 Gew.-% ein. Aber auch Legierungen des Platins mit Unedemetallen (UEM), wie Chrom, Wolfram, Nickel, Kupfer oder Kobalt werden verwendet. Die Zusatzmengen liegen hierbei meist im Bereich Pt/UEM = 5:1 bis 1:5 (Atomverhältnis).

Bei einem erfindungsgemäßen Anodenkatalysator auf der Basis von PtRu/C sorgt die hohe Kristallinität für eine verringerte Adsorption des Kohlenmonoxids auf den Kristallitflächen und somit für eine verringerte Vergiftungsneigung. Der Katalysator weist daher eine höhere Toleranz gegenüber Kohlenmonoxid auf.

Auf der Kathodenseite von Brennstoffzellen, wo reine Platinkatalysatoren zum Einsatz kommen, wird die Aktivität des Katalysators bezüglich der Sauerstoffreduktion (ORR) durch die Anzahl der Kristallitebenen im Platinkristall bestimmt. Um die Aktivität von Pt-Elektrokatalysatoren zu vergrößern, ist es deshalb nicht ausreichend, lediglich die Pt-Oberfläche zu maximieren. Vielmehr ist es notwendig, hohe Kristallinität bei großer Pt-Oberfläche zu erreichen, um den Anteil von (1,0,0), (1,1,0) und (1,1,1)-Platin-Oberflächen-Atomen im Verhältnis zur Gesamtanzahl der Platinatome zu maximieren.

Diese Forderung wird in idealer Weise vom erfindungsgemäßen Katalysator erfüllt. Er ist daher besonders für die Verwendung in Niedertemperatur-Brennstoffzellen (PEMFC, DMFC, PAFC) geeignet.

**Beispiel 1:** Anodenkatalysator für PEM-Brennstoffzellen

Zwei Kilogramm eines rußgeträgerten Elektrokatalysators (Edelmetallbeladung 26,4 Gew.-% Platin und 13,6 Gew.-% Ruthenium auf Vulcan XC 72, Atomverhältnis Pt : Ru = 1:1, hergestellt nach US 6,007,934) werden mit einer Dosierwaage in einen Gas-Dispergator dosiert und mit Stickstoff als Dispergiergas fein verteilt. Der Katalysator wird dann in einem auf 350 °C vorgeheizten Stickstoffstrom in das Reaktionsrohr transportiert.

Verfahrensparameter:

| Traggas | Stickstoff |
|---|---|
| Traggasmenge | 8 m³/Stunde (Stickstoff) |
| Temperatur (Traggas) | 350 °C |
| Behandlungstemperatur | 1300 °C |
| Behandlungsdauer | 3 s (circa) |
| Dosiermenge | 1100 g /Stunde |

Der behandelte Katalysator wird in der Abschreckeinheit mit Stickstoff abgekühlt und in der Filtereinheit aufgefangen. Die Einstellung der Parameter und deren Überwachung wird mit einem Prozeßleitsystem vorgenommen.
Der so behandelte Katalysator weist folgende Eigenschaften auf:
Röntgenografische Messungen (Reflex hkl 111, 2 Theta ca. 40°):

| Partikelgröße (XRD) | 6,3 nm |
|---|---|
| Gitterkonstante | 0,3852 nm |
| Intensität ($I_x$, XRD) | 2800 counts |
| Intensität ($I_a$, XRD) | 400 counts |
| Kristallinitätsgrad $C_x$ | 6 |

Zum Vergleich weist das unbehandelte Ausgangsmaterial die folgenden Daten auf:

| Partikelgröße (XRD) | 2,6 nm |
|---|---|
| Gitterkonstante | 0,3919 nm |
| Intensität ($I_x$, XRD) | 800 counts |
| Intensität ($I_a$, XRD) | 400 counts |
| Kristallinitätsgrad $C_x$ | 1 |

Aufgrund der hohen Kristallinität und gleichzeitig niedriger Partikelgröße zeigt der behandelte Elektrokatalysator sehr gute elektrische Eigenschaften in einer PEM-Brennstoffzelle, und zwar als Anodenkatalysator sowohl im Wasserstoff/Luft- als auch im Reformat/Luft-Betrieb.

**Vergleichsbeispiel 1:** PtRu/C mit konventioneller Temperung

100 Gramm des rußgeträgerten Elektrokatalysators (Edelmetallbeladung 26,4 Gew.-% Platin und 13,6 Gew.-% Ruthenium auf Vulcan XC 72, Atomverhältnis Pt : Ru = 1:1, vergleiche Beispiel 1) werden in einem konventionellen Batchprozeß bei 850°C für 60 min unter Stickstoff getempert. Nach der Temperung im Ofen läßt man das Material unter Schutzgas abkühlen.
Eigenschaften:

| Partikelgröße (XRD) | 13,6 nm |
|---|---|
| Gitterkonstante | 0,3844 nm |
| Intensität ($I_x$, XRD) | 1300 counts |
| Intensität ($I_a$, XRD) | 400 counts |
| Kristallinitätsgrad $C_x$ | 2,25 |

Der Katalysator weist aufgrund der hohen Partikelgröße von 13,6 nm im direkten Vergleich zu Beispiel 1 eine geringere Leistung in der PEM-Brennstoffzelle auf.

**Beispiel 2:** Pt/C-Trägerkatalysator für PEM-Brennstoffzellen

Ein Kilogramm eines rußgeträgerten Elektrokatalysators (Platinbeladung 40 Gew.-% auf Vulcan XC 72) werden mit einer Dosierwaage in einen Gas-Dispergator dosiert und mit Stickstoff als Injektorgasstrom fein verteilt. Der Katalysator wird dann in einem auf 350 °C vorgeheizten Stickstoffstrom in das Reaktionsrohr transportiert.

Verfahrensparameter:

| Traggas | Stickstoff |
|---|---|
| Traggasmenge | 8 $m^3$/Stunde (Stickstoff) |
| Temperatur (Traggas) | 350 °C |
| Behandlungstemperatur | 1200 °C |
| Behandlungsdauer | 3 s (circa) |
| Dosiermenge | 1000 g /Stunde |

Der behandelte Katalysator wird in der Abschreckeinheit mit Stickstoff abgekühlt und in der Filtereinheit aufgefangen. Die Einstellung der Parameter und deren Überwachung wird mit einem Prozeßleitsystem vorgenommen.

Der so behandelte Katalysator weist folgende Eigenschaften auf:

| | |
|---|---|
| Partikelgröße (XRD) | 6,5 nm |
| Gitterkonstante | 0,3931 nm |
| Intensität ($I_x$, XRD) | 3000 counts |
| Intensität ($I_a$, XRD) | 400 counts |
| Kristallinitätsgrad $C_x$ | 6,5 |

Zum Vergleich weist das unbehandelte Ausgangsmaterial die folgenden Daten auf:

| | |
|---|---|
| Partikelgröße (XRD) | 3,9 nm |
| Gitterkonstante | 0,3937nm |
| Intensität ($I_x$, XRD) | 1600 counts |
| Intensität ($I_a$, XRD) | 400 counts |
| Kristallinitätsgrad $C_x$ | 3 |

Aufgrund des hohen Kristallinitätsgrades und der gleichzeitig niedriger Partikelgröße zeigt der behandelte Elektrokatalysator sehr gute elektrische Eigenschaften in einer PEM-Brennstoffzelle, und zwar insbesondere als Kathodenkatalysator im Wasserstoff/Luft- Betrieb.

**Beispiel 3:** PtCr/C-Legierungskatalysator für PEM-Brennstoffzellen

Ein Kilogramm eines rußgeträgerten Elektrokatalysators (Platingehalt 40 Gew.-% auf Vulcan XC 72, Atomverhältnis Pt:Cr = 3:1) werden mit einer Dosierwaage in einen Gas-Dispergator dosiert und mit Stickstoff als Dispergiergas fein verteilt. Der Katalysator wird dann in einem auf 350 °C vorgeheizten Stickstoffstrom in das Reaktionsrohr transportiert.

Verfahrensparameter:

| Traggas | Stickstoff |
|---|---|
| Traggasmenge | 8 $m^3$/Stunde (Stickstoff) |
| Temperatur (Traggas) | 350 °C |
| Behandlungstemperatur | 1400 °C |
| Behandlungsdauer | 3 s (circa) |
| Dosiermenge | 1000 g /Stunde |

Der behandelte Katalysator wird in der Abschreckeinheit mit Stickstoff abgekühlt und in der Filtereinheit aufgefangen. Die Einstellung der Parameter und deren Überwachung wird mit einem Prozeßleitsystem vorgenommen.

Der so behandelte Katalysator weist folgende Eigenschaften auf:

Röntgenografische Messungen (Reflex hkl 111, 2 Theta ca. 40°):

| | |
|---|---|
| Partikelgröße (XRD) | 7,5 nm |
| Gitterkonstante | 0,385 nm |
| Intensität ($I_x$, XRD) | 3200 counts |
| Intensität ($I_a$, XRD) | 400 counts |
| Kristallinitätsgrad $C_x$ | 7 |

Aufgrund des hohen Kristallinitätsgrades und der gleichzeitig niedriger Partikelgröße zeigt der behandelte Elektrokatalysator sehr gute elektrische Eigenschaften in einer PEM-Brennstoffzelle, und zwar insbesondere als Kathodenkatalysator im Wasserstoff/Luft- Betrieb.

**Vergleichsbeispiel 2:** PtCr/C mit konventioneller Temperung

100 Gramm eines rußgeträgerten Elektrokatalysators (Platingehalt 40 Gew.-% Platin auf Vulcan XC 72, Atomverhältnis Pt : Cr = 3:1, vergleiche Beispiel 3) werden in einem konventionellen Batchprozeß bei 900 °C für 60 min unter Formiergas getempert. Nach der Temperung im Ofen läßt man das Material unter Schutzgas abkühlen.

Eigenschaften:

| | |
|---|---|
| Partikelgröße (XRD) | 16 nm |
| Gitterkonstante | 0,386 nm |
| Intensität ($I_x$, XRD) | 2000 counts |
| Intensität ($I_a$, XRD) | 400 counts |
| Kristallinitätsgrad $C_x$ | 4 |

Der Katalysator weist aufgrund der hohen Partikelgröße von 16 nm im direkten Vergleich zu Beispiel 4 eine geringe Leistung in der PEM-Brennstoffzelle auf.

**Beispiel 4:** Pt/Aluminiumoxid-Katalysator für die Gasphasenkatalyse

Ca. 2 kg eines feuchten Pulvers, hergestellt durch Porenvolumenimprägnierung des Trägers mit der Edelmetallösung (Incipient-wetness Methode) bestehend aus:

78 Gew.-% Aluminiumoxid ($\gamma$-Al$_2$O$_3$, BET-Oberfläche 140 m$^2$/g)

20 Gew.-% Wasser

2 Gew.-% Platinnitrat

werden über eine Dosierwaage in den Gas-Dispergator dosiert, mit Stickstoff als Dispergiergas fein verteilt und in das Reaktionsrohr transportiert.

Verfahrensparameter:

| | |
|---|---|
| Traggas | Stickstoff |
| Traggasmenge | 8 m$^3$/Stunde (Stickstoff) |
| Temperatur (Traggas) | 350 °C |
| Behandlungstemperatur | 1100 °C |
| Behandlungsdauer | 3 s (circa) |
| Dosiermenge | 1000 g /Stunde |

Nach dem Verlassen des Reaktionsrohres wird der Katalysator in der Abschreckeinheit mit Stickstoff abgekühlt und in der Filtereinheit aufgefangen. Die Einstellung der Parameter und deren Überwachung wird mit einem Prozeßleitsystem vorgenommen.

Der behandelte Katalysator weist folgende Eigenschaften auf:

| Zusammensetzung | 2,5 Gew.-% Pt auf Aluminiumoxid |
|---|---|
| Partikelgröße (XRD) | 5 nm |
| Intensität ($I_x$, XRD) | 3400 counts |
| Intensität ($I_a$, XRD) | 400 counts |
| Kristallinitätsgrad $C_x$ | 7,5 |

Der im konventionellen Verfahren getemperte Katalysator (900 °C, Verweilzeit 60 min, Stickstoff) zeigt dagegen eine Partikelgröße von 12 nm und einen Kristallinitätsgrad $C_x$=4.

Der Katalysator von Beispiel 4 wird in der Gasphasenkatalyse verwendet, beispielsweise als Katalysator für die Reinigung der Abgase von Verbrennungsmotoren oder als Katalysator zur selektiven Oxidation von CO in sogenannten PROX-Reaktoren zur Wasserstoffreinigung in Brennstoffzellensystemen.

Aufgrund der geringen Partikelgröße und gleichzeitig hoher Kristallinität erhält man sehr gute Ergebnisse, insbesondere bei der Standzeit/Lebensdauer des Katalysators.

**Patentansprüche**

1. Edelmetallhaltiger Trägerkatalysator enthaltend auf einem pulverförmigen Trägermaterial eines der Edelmetalle aus der Gruppe Au, Ag, Pt, Pd, Rh, Ru, Ir, Os oder Legierungen eines oder mehrerer dieser Edelmetalle,
**dadurch gekennzeichnet,**
**daß** die auf dem Trägermaterial abgeschiedenen Kristallite der Edelmetalle einen relativen röntgenografischen Kristallinitätsgrad über 2 und eine mittlere Partikelgröße zwischen 2 und 10 nm aufweisen.

2. Trägerkatalysator nach Anspruch 1,
**dadurch gekennzeichnet,**
**daß** der relative röntgenografische Kristallinitätsgrad größer als 5 ist.

3. Trägerkatalysator nach Anspruch 1 oder 2,
**dadurch gekennzeichnet,**
**daß** es sich bei dem Trägermaterial um ein kohlenstoffhaltiges Material aus der Gruppe Ruß, Graphit, Aktivkohle und faserförmige, graphitische Nanoröhren handelt.

4. Trägerkatalysator nach Anspruch 1,
**dadurch gekennzeichnet,**
**daß** es sich bei dem Trägermaterial um ein oxidisches Material aus der Gruppe aktives Aluminiumoxid, Aluminiumsilicat, Zeolith, Titanoxid, Zirkonoxid, Seltenerdoxide oder Mischungen oder Mischoxide davon handelt.

5. Trägerkatalysator nach einem der Ansprüche 3 oder 4,
**dadurch gekennzeichnet,**
**daß** die Edelmetalle zusätzlich mit wenigstens einem Nichtedelmetall aus der Gruppe Ti, Zr, V, Cr, Mn, Fe, Co, Ni, Cu und Zn legiert sind.

6. Trägerkatalysator nach Anspruch 3,
**dadurch gekennzeichnet,**
**daß** er Pt auf Ruß mit einer Oberfläche von wenigstens 40 m$^2$/g in einer Konzentration zwischen 5 und 80 Gew.-%, bezogen auf das Gesamtgewicht aus Trägermaterial und Pt, enthält.

7. Trägerkatalysator nach Anspruch 3,
**dadurch gekennzeichnet,**
**daß** er eine Pt/Ru-Legierung auf Ruß mit einer Oberfläche von wenigstens 40 m$^2$/g in einer Konzentration zwischen 5 und 80 Gew.-%, bezogen auf das Gesamtgewicht aus Trägermaterial und der Legierung, enthält und wobei das Atomverhältnis von Pt zu Ru zwischen 5:1 und 1:5 beträgt.

8. Verwendung des Katalysators nach einem der Ansprüche 1 bis 7 als Anoden- oder Kathodenkatalysator für eine Niedertemperatur-Brennstoffzelle.

9. Verwendung des Katalysators nach einem der Ansprüche 1 bis 7 als Katalysator für die Reinigung der Abgase von Verbrennungsmotoren.

10. Verfahren zur Herstellung eines Trägerkatalysators gemäß Anspruch 1,
**dadurch gekennzeichnet,**
**daß** das Trägermaterial durch Porenvolumenimprägnierung oder durch homogene Abscheidung aus der Lösung mit Vorstufen der Edelmetalle belegt, im Falle der homogenen Abscheidung von der Lösung abgetrennt und getrocknet, und dann einer kurzzeitigen, allseitigen Temperaturbehandlung bei einer Temperatur zwischen 1000 und 1800 °C für die Dauer von weniger als einer Minute ausgesetzt wird, wobei sich die Kristallinität und gegebenenfalls die Legierung herausbildet.

11. Verfahren nach Anspruch 10,
**dadurch gekennzeichnet,**
**daß** die zur Temperaturbehandlung nötige Wärmeenergie durch Strahlung auf das Trägermaterial übertragen wird.

12. Verfahren nach Anspruch 11,
**dadurch gekennzeichnet,**
**daß** das mit den Edelmetallen belegte Trägermaterial zur kurzzeitigen, allseitigen Temperaturbehandlung kontinuierlich in einem auf eine Temperatur zwischen 300 und 500 °C erwärmten, inerten Traggas dispergiert, durch einen beheizten Reaktor geleitet und nach Verlassen des Reaktors abgeschreckt und anschließend vom Traggasstrom abgetrennt wird.

13. Verfahren nach Anspruch 12,
**dadurch gekennzeichnet,**
**daß** Traggasstrom und Trägermaterial durch Einmischen eines inerten und gekühlten Gases oder Gasgemisches in den Traggasstrom auf eine Temperatur unterhalb von 500 °C abgekühlt werden.

14. Verfahren zur Herstellung eines Trägerkatalysators nach Anspruch 1,
**dadurch gekennzeichnet,**
**daß** eine Vorstufe des Trägerkatalysators hergestellt wird, die auf der Oberfläche des Trägermaterials die katalytisch aktiven Edelmetalle in Form von Partikeln mit mittleren Partikelgrößen zwischen 1 und 10 nm aufweist und daß diese Vorstufe einer kurzzeitigen, allseitigen Temperaturbehandlung bei einer Temperatur zwischen 1000 und 1800 °C für die Dauer von weniger als einer Minute ausgesetzt wird, wobei sich die Kristallinität und gegebenenfalls die Legierung herausbildet.

**Figur**

<table>
<tr><td></td><td>**Europäisches Patentamt**</td><td>**EUROPÄISCHER RECHERCHENBERICHT**</td><td>Nummer der Anmeldung<br>EP 01 11 0891</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 355 853 A (N E CHEMCAT CORP)<br>28. Februar 1990 (1990-02-28)<br>* Seite 3, Zeile 55 - Seite 5, Zeile 13 *<br>* Seite 5, Zeile 48 - Seite 6, Zeile 21 *<br>* Beispiele; Tabellen 1,2 *<br>* Ansprüche * | 1-3,5,6,<br>8,10,14 | B01J23/38<br>B01J23/54<br>B01J23/89<br>B01J35/10<br>B01J35/04<br>H01M4/92<br>B01J37/08 |
| X | EP 0 386 764 A (N E CHEMCAT CORP)<br>12. September 1990 (1990-09-12)<br>* Seite 3, Zeile 45 - Seite 5, Zeile 22 *<br>* Seite 5, Zeile 52 - Seite 6, Zeile 26 *<br>* Beispiele; Tabellen 1,2 *<br>* Ansprüche * | 1-3,5,6,<br>8,10,14 | |
| X | DE 36 43 332 A (ENGELHARD NIPPON)<br>19. November 1987 (1987-11-19)<br>* Seite 4, Zeile 60 - Seite 5, Zeile 14 *<br>* Beispiele; Tabelle 1 *<br>* Ansprüche * | 1-3,5,6,<br>8 | |
| X | EP 1 046 423 A (DEGUSSA)<br>25. Oktober 2000 (2000-10-25)<br>* Absätze<br>'0001!,'0014!,'0015!,'0018!,'0043!,'0058!,<br>'0059!,'0061! * | 1,4,9,<br>10,14 | RECHERCHIERTE SACHGEBIETE (Int.Cl.7)<br><br>B01J<br>H01M |
| X | EP 0 694 982 A (DEGUSSA)<br>31. Januar 1996 (1996-01-31)<br>* Seite 1, Zeile 4 - Zeile 5 *<br>* Seite 3, Zeile 5 - Zeile 13 *<br>* Seite 5, Zeile 32 - Zeile 51 *<br>* Beispiele; Tabelle 2 *<br>* Seite 6, Zeile 56 - Seite 7, Zeile 20 *<br>* Ansprüche 1,5 * | 1-3,5,8,<br>10,14 | |

-/--

Der vorliegende Recherchenbericht wurde für alle Patentansprüche erstellt

| Recherchenort | Abschlußdatum der Recherche | Prüfer |
|---|---|---|
| MÜNCHEN | 12. Oktober 2001 | Gosselin, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie,übereinstimmendes Dokument

EPO FORM 1503 03.82 (P04C03)

**Europäisches Patentamt**

## EUROPÄISCHER RECHERCHENBERICHT

Nummer der Anmeldung

EP 01 11 0891

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 145 314 A (FUNG SHUN C ET AL) 20. März 1979 (1979-03-20) * Spalte 2, Zeile 22 - Zeile 45 * * Spalte 4, Zeile 13 - Zeile 17 * * Spalte 4, Zeile 46 - Zeile 54 * * Beispiel 1; Tabelle 1 * * Ansprüche 1,4,5,17,22-26,38-41,49 * | 1-7 | |
| X | US 5 132 193 A (REDDY N R K VILAMBI ET AL) 21. Juli 1992 (1992-07-21) * Spalte 1, Zeile 10 - Zeile 14 * * Spalte 2, Zeile 65 - Spalte 3, Zeile 21 * * Spalte 3, Zeile 35 - Zeile 39 * * Spalte 4, Zeile 53 - Spalte 5, Zeile 9 * * Spalte 6, Zeile 40 - Zeile 54 * * Spalte 8, Zeile 37 - Zeile 42 * * Anspruch 7 * | 1-3,5,8 | |
| D,X | EP 0 880 188 A (DEGUSSA) 25. November 1998 (1998-11-25) * Seite 3, Zeile 12 - Zeile 20 * * Seite 6, Zeile 52 - Zeile 57 * | 1-3,8 | RECHERCHIERTE SACHGEBIETE (Int.Cl.7) |
| X | US 5 133 842 A (TAYLOR EARL J ET AL) 28. Juli 1992 (1992-07-28) * Spalte 3, Zeile 15 - Spalte 4, Zeile 3 * * Spalte 5, Zeile 58 - Zeile 65 * * Spalte 8, Zeile 58 - Zeile 67 * * Spalte 9, Zeile 48 - Spalte 10, Zeile 50 * * Spalte 11, Zeile 63 - Spalte 12, Zeile 24 * * Spalte 13, Zeile 21 - Zeile 37 * * Ansprüche 1,2 * | 1-3,8 | |

-/--

Der vorliegende Recherchenbericht wurde für alle Patentansprüche erstellt

| Recherchenort | Abschlußdatum der Recherche | Prüfer |
|---|---|---|
| MÜNCHEN | 12. Oktober 2001 | Gosselin, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

**Europäisches Patentamt**

# EUROPÄISCHER RECHERCHENBERICHT

Nummer der Anmeldung

EP 01 11 0891

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 994 520 A (DEGUSSA) 19. April 2000 (2000-04-19) * Absätze '0001!, '0002!, '0018!-'0026!, '0035!, '0048!-'0061!, '0070! * * Ansprüche 1,3 * | 1-3,5,8, 10,14 | |
| A | US 4 137 373 A (JALAN VINOD M ET AL) 30. Januar 1979 (1979-01-30) * Spalte 6, Zeile 37 - Spalte 8, Zeile 55; Anspruch 1 * | 1,8,10, 14 | |
| A | US 5 861 222 A (WENDT HARTMUT ET AL) 19. Januar 1999 (1999-01-19) * Spalte 5, Zeile 44 - Zeile 55 * | 1-3,5,8 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| MÜNCHEN | 12. Oktober 2001 | Gosselin, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 01 11 0891

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2001

| Im Recherchenbericht angeführtes Patentdokument | | Datum der Veröffentlichung | Mitglied(er) der Patentfamilie | | Datum der Veröffentlichung |
|---|---|---|---|---|---|
| EP 0355853 | A | 28-02-1990 | JP | 1967150 C | 18-09-1995 |
| | | | JP | 2061961 A | 01-03-1990 |
| | | | JP | 6097614 B | 30-11-1994 |
| | | | DE | 68908042 D1 | 09-09-1993 |
| | | | DE | 68908042 T2 | 16-12-1993 |
| | | | EP | 0355853 A2 | 28-02-1990 |
| | | | US | 4970128 A | 13-11-1990 |
| | | | US | 5096866 A | 17-03-1992 |
| EP 0386764 | A | 12-09-1990 | JP | 1967339 C | 18-09-1995 |
| | | | JP | 2236960 A | 19-09-1990 |
| | | | JP | 6097615 B | 30-11-1994 |
| | | | DE | 69002487 D1 | 09-09-1993 |
| | | | DE | 69002487 T2 | 16-12-1993 |
| | | | EP | 0386764 A2 | 12-09-1990 |
| | | | US | 5024905 A | 18-06-1991 |
| DE 3643332 | A | 19-11-1987 | JP | 1801079 C | 12-11-1993 |
| | | | JP | 5010979 B | 12-02-1993 |
| | | | JP | 62269751 A | 24-11-1987 |
| | | | DE | 3643332 A1 | 19-11-1987 |
| | | | GB | 2190537 A ,B | 18-11-1987 |
| | | | US | 4716087 A | 29-12-1987 |
| EP 1046423 | A | 25-10-2000 | EP | 1046423 A2 | 25-10-2000 |
| | | | AU | 2889800 A | 26-10-2000 |
| | | | BR | 0001659 A | 31-10-2000 |
| | | | CN | 1271618 A | 01-11-2000 |
| | | | JP | 2000312825 A | 14-11-2000 |
| | | | PL | 339830 A1 | 06-11-2000 |
| | | | TR | 200001071 A2 | 21-11-2000 |
| | | | US | 6294140 B1 | 25-09-2001 |
| EP 0694982 | A | 31-01-1996 | DE | 4426973 C1 | 28-03-1996 |
| | | | AT | 172326 T | 15-10-1998 |
| | | | DE | 59503910 D1 | 19-11-1998 |
| | | | DK | 694982 T3 | 23-06-1999 |
| | | | EP | 0694982 A1 | 31-01-1996 |
| | | | ES | 2125526 T3 | 01-03-1999 |
| | | | JP | 8057317 A | 05-03-1996 |
| | | | US | 5489563 A | 06-02-1996 |
| US 4145314 | A | 20-03-1979 | KEINE | | |
| US 5132193 | A | 21-07-1992 | AU | 8547391 A | 02-03-1992 |
| | | | WO | 9202965 A1 | 20-02-1992 |

EPO FORM P0461

Für nähere Einzelheiten zu diesem Anhang : siehe Amtsblatt des Europäischen Patentamts, Nr. 12/82

**ANHANG ZUM EUROPÄISCHEN RECHERCHENBERICHT
ÜBER DIE EUROPÄISCHE PATENTANMELDUNG NR.**

EP 01 11 0891

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2001

| Im Recherchenbericht angeführtes Patentdokument | Datum der Veröffentlichung | Mitglied(er) der Patentfamilie | Datum der Veröffentlichung |
|---|---|---|---|
| EP 0880188 A | 25-11-1998 | DE 19721437 A1 | 26-11-1998 |
| | | CA 2238123 A1 | 21-11-1998 |
| | | EP 0880188 A2 | 25-11-1998 |
| | | JP 10334925 A | 18-12-1998 |
| | | US 6007934 A | 28-12-1999 |
| US 5133842 A | 28-07-1992 | AT 136949 T | 15-05-1996 |
| | | AU 4651789 A | 12-06-1990 |
| | | CA 2003299 A1 | 17-05-1990 |
| | | DE 68926306 D1 | 23-05-1996 |
| | | DE 68926306 T2 | 19-09-1996 |
| | | EP 0444138 A1 | 04-09-1991 |
| | | JP 4502980 T | 28-05-1992 |
| | | WO 9005798 A1 | 31-05-1990 |
| | | US 5041195 A | 20-08-1991 |
| EP 0994520 A | 19-04-2000 | DE 19848032 A1 | 20-04-2000 |
| | | BR 9904688 A | 08-08-2000 |
| | | EP 0994520 A1 | 19-04-2000 |
| | | JP 2000123843 A | 28-04-2000 |
| | | US 6165635 A | 26-12-2000 |
| US 4137373 A | 30-01-1979 | AU 4134178 A | 31-05-1979 |
| | | BR 7807532 A | 24-07-1979 |
| | | CA 1104998 A1 | 14-07-1981 |
| | | CH 638693 A5 | 14-10-1983 |
| | | DE 2848138 A1 | 13-06-1979 |
| | | DK 521478 A ,B, | 24-05-1979 |
| | | ES 475293 A1 | 01-05-1979 |
| | | FR 2409792 A1 | 22-06-1979 |
| | | GB 2008429 A ,B | 06-06-1979 |
| | | IL 55885 A | 30-11-1981 |
| | | JP 1160127 C | 25-07-1983 |
| | | JP 54082394 A | 30-06-1979 |
| | | JP 57048258 B | 15-10-1982 |
| | | NL 7810871 A | 28-05-1979 |
| | | SE 439438 B | 17-06-1985 |
| | | SE 7811784 A | 24-05-1979 |
| US 5861222 A | 19-01-1999 | DE 19611510 A1 | 25-09-1997 |
| | | EP 0797265 A2 | 24-09-1997 |
| | | JP 10003929 A | 06-01-1998 |

Für nähere Einzelheiten zu diesem Anhang : siehe Amtsblatt des Europäischen Patentamts, Nr.12/82